# EUROPÄISCHE PATENTSCHRIFT

(11) **EP 2 403 918 B1**
(45) Veröffentlichungstag und Bekanntmachung des Hinweises auf die Patenterteilung: **18.01.2017**
(21) Anmeldenummer: 10703897.8
(22) Anmeldetag: 16.02.2010
(51) Int. Cl.: C09J 183/04

(54) **HAFTKLEBEMASSE**
PRESSURE-SENSITIVE ADHESIVE COMPOUND
MATIÈRE AUTO-ADHÉSIVE

(30) Priorität: 04.03.2009 DE 102009011165
(43) Veröffentlichungstag der Anmeldung: 11.01.2012
(73) Patentinhaber: tesa SE, 22848 Norderstedt (DE)
(72) Erfinder: HUSEMANN, Marc, 22605 Hamburg (DE); UTESCH, Nils, 20257 Hamburg (DE)
(86) Internationale Anmeldenummer: PCT/EP2010/051912
(87) Internationale Veröffentlichungsnummer: WO 2010/100024

(56) Entgegenhaltungen:
- US-A- 5 436 061
- US-A1- 2004 122 142
- US-B1- 6 703 120

## Beschreibung

### Haftklebemasse

Die vorliegende Erfindung betrifft die Verwendung einer Haftklebemasse zur Verklebung und Herstellung von Touch Panels.

Haftklebemassen werden heute sehr vielfältig eingesetzt. So existieren im Industriebereich die verschiedensten Anwendungen. Besonders zahlreich werden Klebebänder basierend auf Haftklebemassen im Elektronikbereich oder im Konsumgüterelektronikbereich eingesetzt. Auf Grund der hohen Stückzahlen lassen sich hier Haftklebebänder sehr schnell und leicht verarbeiten, so dass andere Prozesse, wie z.B. Nieten oder Schweißen, zu aufwändig wären. Neben der normalen Verbindungsfunktion müssen diese Haftklebebänder ggf. noch weitere Funktionen übernehmen. So kann dies z.B. eine thermische Leitfähigkeit, eine elektrische Leitfähigkeit oder auch eine optische Funktion sein. In letzterem Fall werden z.B. Haftklebebänder eingesetzt, die lichtabsorbierende oder lichtreflektierende Funktionen haben. Eine weitere optische Funktion ist beispielsweise eine geeignete Lichttransmission. Hier werden Haftklebebänder und Haftklebemassen eingesetzt, die sehr transparent sind, keine Eigenfärbung aufweisen und auch eine hohe Lichtstabilität besitzen.

In vielen Fällen hat eine Haftklebemasse für optische Zwecke neben der Verbindungsfunktion die Funktion, Luft auszuschließen, da Luft einen Brechungsindex von 1 aufweist und die optischen Folien oder Gläser einen in der Regel deutlich größeren Brechungsindex aufweisen. Der Unterschied der Brechungsindizes führt beim Übergang von Luft zum optischen Bauteil zu einer Reflektion, die die Transmission reduziert. Ein Weg dieses Problem zu lösen stellen Antireflektivbeschichtungen dar, die den Übergang des Lichtes in das optische Bauteil erleichtern und die Reflektion vermindern. Alternativ oder ergänzend kann auch eine optische Haftklebemasse eingesetzt werden, die einen ähnlichen Brechungsindex wie das optische Bauteil aufweist. Dadurch wird die Reflektion an dem optischen Bauteil deutlich minimiert und die Transmission erhöht.

Eine typische Anwendung sind z.B. die Verklebung von Touch Panels auf dem LCD oder OLED Display oder die Verklebung von ITO-Filmen (indium tin oxide - Indiumzinnoxid) für kapazitive Touch Panels. Insbesondere die Verklebung von ITO-Filmen stellt eine besondere Herausforderung dar. So werden hier besondere Anforderungen an die Neutralität der Haftklebemassenformulierung gestellt. Die Haftklebemasse darf keine Säurefunktionen enthalten, die z.B. bei Kontakt mit ITO-Filmen die elektrische Leitfähigkeit über einen längeren Zeitraum negativ beeinflussen könnte. Eine weitere Anforderung besteht in dem Auffliesverhalten. So weisen z.B. viele ITO-Filme Strukturierungen, üblicherweise Mikrostrukturierungen in der Oberfläche, auf, die von der Haftklebemasse gefüllt werden sollen. Dies sollte ohne den Einschluss von Blasen erfolgen, da eine Blasenbildung die Transmission mindern würde.

Für transparente Verklebungen sind eine Vielzahl von Acrylathaftklebemassen bekannt, die im optischen Bereich eingesetzt werden. In US 6,703,463 B2, der JP 2002-363523 A oder der US2002/0098352 A1 werden z.B. Acrylathaftklebemassen beschrieben, die unterschiedliche Brechungsindizes aufweisen. Diese Klebemassen weisen jedoch Nachteile im Hinblick auf eine elektrische Neutralität gegenüber ITO-Filmen auf.

Des Weiteren werden aber auch Siliconhaftklebemassen eingesetzt. Solche Klebemassen beschreibt die EP 1 652 899 B1. Die hier verwendeten Siliconhaftklebemassen weisen jedoch eine nur sehr geringe Klebkraft auf und sind daher nicht für die zuvor permanenten Verklebungen geeignet. Weitere Siliconhaftklebemassen werden auch in der US 2006/008662 A1 beschrieben. Auch die hier beschriebenen Haftklebemassen weisen nur eine geringe Klebkraft auf, so dass sie nicht für permanente Verklebungen geeignet sind.

US 2004/0122142 A1 beschreibt eine additionshärtende Siliconkautschukzusammensetzung, die ein Alkenyl-haltiges Organopolysiloxan, je ein Alkenyl-freies und Alkenyl-haltiges, hauptsächlich aus M- und Q-Einheiten bestehendes, harzartiges Copolymer, ein Organowasserstoffpolysiloxan und einen Additionskatalysator umfasst und zu einem Siliconkautschuk mit klebenden Eigenschaften aushärtet.

Somit besteht immer noch der Bedarf für eine verbesserte optische Haftklebemasse, die die zuvor genannten Nachteile nicht aufweist. Insbesondere sollte eine geeignete Klebemasse eine hohe optische Transparenz sowie eine hohe UV-Stabilität aufweisen. Für die bevorzugte Anwendung der Verklebung elektrisch leitfähiger Substrate, insbesondere von ITO-Filmen, sollte die Klebemasse sich inert verhalten.

Die vorliegende Erfindung löst das zuvor beschriebene Problem durch die Verwendung einer Klebemasse gemäß Anspruch 1. Bevorzugte Ausgestaltungen und Weiterbildungen sind Gegenstand der jeweiligen Unteransprüche.

Erfindungsgemäß wurde erkannt, dass sich entgegen der Erfahrung, dass Haftklebemassen basierend auf Silicon eine nur geringe Klebkraft aufweisen, dennoch eine geeignete Klebemasse findet, die eine ausreichende Klebkraft bereitstellt und zudem auch die notwendigen optischen Anforderungen erfüllt. Eine derartige Siliconklebemasse, insbesondere eine derartige Siliconhaftklebemasse, basiert auf Polysiloxan.

Siliconhaftklebmassen bestehend aus Poly(diorgano)siloxanen (z.B. PDMS-Polydimethylsiloxan) und Silikatharzen (MQ Harz) werden mit Toluol oder Xylol verdünnt. Es hat sich gezeigt, dass diese Siliconhaftklebmassen mittlere bis gute Klebkräfte auf niederenergetischen, schwierig zu verklebenden Substraten aufweisen, im Speziellen auch auf Siliconen oder siliconisierten Substraten wir z.B. UV-Lacken. Aufgrund der sehr stabilen Si-O-Si Bindung weisen Siliconhaftklebemassen eine exzellente Widerstandsfähigkeit gegenüber Umwelteinflüssen wie UV-Licht, Ozon, Chemikalien und hohen Temperaturen auf und haben somit extrem hohe Lebenszyklen. Die Bindungsstärke der Si-O-Si Bindung ist auch der Grund für die Biokompatibilität von Siliconen. Die Abwesenheit von C=C Doppelbindungen in Kombination mit der fehlenden Wechselwirkung zwischen UV-Licht und dem Si-O-Si Polymerrückgrat resultiert in einer ausgezeichneten optischen Reinheit und einer nahezu vollständigen Lichttransmission. Darüber hinaus können derartige Siliconhaftklebemassen aufgrund des niedrigen T_{G} von bis zu -120°C auch noch bei Temperaturen von -50°C verarbeitet werden und zeigen zudem exzellente Absorptionseigenschaften gegenüber Erschütterungen, Vibrationen, Lärm und Temperatureinflüssen.

Demgemäß betrifft die Erfindung die Verwendung einer Haftklebemasse basierend auf einem kondensationsvernetzenden Silicon bestehend aus folgenden Komponenten:
a) einem hydroxy-funktionalisierten Organopolysiloxan, welches aus mindestens einer Diorganosiloxaneinheit besteht,
b) einem Organopolysiloxanharz mit der Formel: (R¹₃SiO_{1/2})ₓ(SiO_{4/2})₁, wobei R¹ eine substituierte oder unsubstituierte monovalente Kohlenwasserstoffgruppe, ein Wasserstoffatom oder eine Hydroxygruppe und x eine Zahl zwischen 0,5 und 1,2 ist,
c) optional einem Stabilisator
d) optional einem Initiator
oder auf einem additionssvernetzenden Silicon bestehend aus folgenden Komponenten:
a) einem Organopolysiloxan, welches aus mindestens einer Diorganosiloxaneinheit besteht und mindestens zwei Silizium-gebundene Alkenylgruppen in jedem Molekül trägt,
b) einem Organopolysiloxanharz mit der Formel: (R¹₃SiO_{1/2})ₓ(SiO_{4/2})₁, wobei R¹ eine substituierte oder unsubstituierte monovalente Kohlenwasserstoffgruppe, ein Wasserstoffatom oder eine Hydroxygruppe und x eine Zahl zwischen 0,5 und 1,2 ist,
c) einem Organopolysiloxan, welches im Mittel wenigstens zwei Silizium-gebundene Wasserstoffatome in jedem Molekül trägt, in einer Menge, dass 0,01 bis 10 Mol Silizium-gebundene Wasserstoffatome pro Mol der gesamten Alkenylgruppen der Komponenten a), b) und, sofern vorhanden, e) vorhanden sind, und welches frei von olefinischen Doppelbindungen ist,
d) einem metallorganischen Katalysator der 10. Gruppe des Periodensystems der Elemente
e) optional einem Inhibitor

Die Klebemassen weisen nach ASTM D 1003 jeweils eine Lichttransmission größer 86 % und einen Haze kleiner 5 % auf und eignen sich somit insbesondere für die Verklebung optischer Bauteile. Aufgrund der guten Kohäsions- und Adhäsionseigenschaften sind diese Klebemassen insbesondere auch für die Verklebung von flexiblen Objekten, beispielsweise Folien geeignet.

### Haftklebemasse

Als Haftklebemassen kommen insbesondere solche zum Einsatz, die auf einem kondensationsvernetzenden Silicon bestehend aus den nachfolgend genannten Komponenten basieren:
a) einem hydroxy-funktionalisierten Organopolysiloxan, welches aus mindestens einer Diorganosiloxaneinheit besteht,
b) einem Organopolysiloxanharz mit der Formel: (R¹₃SiO_{1/2})ₓ(SiO_{4/2})₁, wobei R¹ eine substituierte oder unsubstituierte monovalente Kohlenwasserstoffgruppe, ein Wasserstoffatom oder eine Hydroxygruppe und x eine Zahl zwischen 0,5 und 1,2 ist,
c) optional einem Stabilisator
d) optional einem Initiator

Siliconhaftklebmassen dieser Art sind im Handel frei erhältlich. Beispielhaft seien an dieser Stelle genannt: DC 280, DC 282, Q2-7735, DC 7358, Q2-7406 von Dow Corning, PSA 750, PSA 518, PSA 910, PSA 6574 von Momentive Performance Materials, KRT 001, KRT 002, KRT 003 von ShinEtsu, PSA 45559 von Wacker Silicones sowie PSA 400, PSA 401 von BlueStar Silicones.

Alternativ kommen als Haftklebemasse solche zum Einsatz, die auf einem additionsvernetzten Silicon aus den nachfolgend genannten Komponenten basieren:
a) einem Organopolysiloxan, welches aus mindestens einer Diorganosiloxaneinheit besteht und mindestens zwei Silizium-gebundene Alkenylgruppen in jedem Molekül trägt,
b) einem Organopolysiloxanharz mit der Formel: (R¹₃SiO_{1/2})ₓ(SiO_{4/2})₁, wobei R¹ eine substituierte oder unsubstituierte monovalente Kohlenwasserstoffgruppe, ein Wasserstoffatom oder eine Hydroxygruppe und x eine Zahl zwischen 0,5 und 1,2 ist,
c) einem Organopolysiloxan, welches im Mittel wenigstens zwei Silizium-gebundene Wasserstoffatome in jedem Molekül trägt, in einer Menge, dass 0.01 bis 10 Mol Silicium-gebundene Wasserstoffatome pro Mol der gesamten Alkenylgruppen der Komponenten a), b) und e) vorhanden sind und welches frei von olefinischen Doppelbindungen ist,
d) einem metallorganischen Katalysator der 10. Gruppe des Periodensystems der Elemente
e) optional einem Inhibitor

Siliconhaftklebmassen dieser Art sind im Handel frei erhältlich. Beispielhaft seien hier genannt: DC 7657, DC 2013 von Dow Corning, KR 3700, KR 3701 von ShinEtsu.

Zur Erzielung der erforderlichen klebtechnischen Eigenschaften werden den beschriebenen Siliconformulierungen so genannte MQ-Harze mit der Formel (R¹₃SiO_{1/2})ₓ(SiO_{4/2})₁ zugesetzt. Als M-Einheit werden darin die (R¹₃SiO_{1/2})-Einheiten bezeichnet, als Q-Einheit die (SiO_{4/2})-Einheiten. Jedes R¹ stellt unabhängig voneinander eine monovalente gesättigte Kohlenwasserstoffgruppe, eine monovalente ungesättigte Kohlenwasserstoffgruppe, eine monovalente halogenierte Kohlenwasserstoffgruppe, ein Wasserstoffatom oder eine Hydroxygruppe dar. Das Verhältnis von M-Einheiten zu Q-Einheiten (M:Q) liegt bevorzugt im Bereich von 0,5 bis 1,2.

Bei den MQ-Harzen handelt es sich vorteilhaft um solche mit einem gewichtsmittleren Molekulargewicht M_{W} von 500g/mol ≤ M_{W} ≤ 100.000 g/mol, bevorzugt von 1.000 g/mol ≤ M_{W} ≤ 25.000 g/mol, wobei sich die Angaben des mittleren Molekulargewichtes M_{W} in dieser Schrift auf die Bestimmung per Gelpermeationschromatographie beziehen (siehe weiter hinten; experimenteller Teil).

Es hat sich als günstig herausgestellt, wenn Klebemassen eingesetzt werden, bei denen das Anteilsverhältnis - bezogen auf Gewichtsprozent - von Polydiorganosiloxan zu MQ-Harz im Bereich von 20:80 bis 80:20, bevorzugt im Bereich von 30:70 bis zu 60:40, liegt.

MQ-Harze dieser Art sind im Handel frei erhältlich. Beispielhaft seien hier genannt: SL 160, SL 200, DC 2-7066 von Dow Corning, SR 545, SR 1000, 6031 SL von Momentive Performance Materials, CRA 17, CRA 42, MQ-Harz 803 von Wacker.

Neben der Harzmodifizierung können auch weitere Additive zu der Haftklebemasse hinzu gegeben werden. Diese Additive werden insbesondere dermaßen gewählt werden, dass sich die optischen Eigenschaften nicht verschlechtern. Als weitere Additive können typischerweise genutzt werden:
- Prozessstabilisatoren, wie zum Beispiel Vinylsilane oder Alkinole als Inhibitoren für den Platinkatalysator
- Prozessbeschleuniger wie zum Beispiel Aminoorganyle
- Füllstoffe, wie zum Beispiel Siliziumdioxid, Glas (gemahlen oder in Form von Kugeln), Aluminiumoxide oder Zinkoxide, wobei die Füllstoffe insbesondere so klein gemahlen sind, dass sie optisch nicht sichtbar sind
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene, wie natürliches oder synthetisch erzeugtes Polyisopren oder Polybutadien; chemisch im wesentlichen gesättigte Elastomere, wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe, wie zum Beispiel halogenhaltige, acrylathaltige oder vinyletherhaltige Polyolefine, um nur einige wenige zu nennen
- Plastifizierungsmittel, wie zum Beispiel Flüssigharze, Weichmacheröle oder niedermolekulare flüssige Polymere, wie zum Beispiel niedermolekulare Siliconöle mit Molmassen < 1500 g/mol (Zahlenmittel)

Die kondensationsationsvernetzenden Siliconhaftklebmassen werden zur Erzielung einer genügenden Kohäsion bevorzugt mit Peroxo-Initiatoren compoundiert. Besonders bevorzugt wird dafür Benzoylperoxid (BPO) verwendet. Die Peroxo-Initiatoren werden insbesondere in einer Menge von 0,2 bis 5 Gew.% bezogen auf den Festanteil der Siliconklebmasse eingesetzt. Um ein vernünftiges Maß zwischen Kohäsions- und Adhäsionsvermögen zu erzielen, wird insbesondere ein BPO-Gehalt von 0,5 bis 2 Gew.% gewählt. Bei der Lösungsmittelbeschichtung der Klebmasse wird zunächst für mindestens 2 Minuten eine Temperatur von 70-90°C gewählt, um die Lösungsmittel zu verdampfen. Anschließend wird für mindestens 2 Minuten eine Temperatur von 170-180°C eingestellt, um den Peroxidzerfall und so den Vernetzungsprozess zu initiieren.

Die Erzielung einer ausreichenden Kohäsion für additionsvernetzende Siliconklebmassen erfolgt insbesondere durch eine Platin-katalysierte Hydrosilylierungsreaktion zwischen den alkenylfunktionalisierten Organopolysiloxanen und den korrespondierenden SiHfunktionalisierten Organopolysiloxanen. Dabei wird bei der Beschichtung aus Lösung zunächst das Lösungsmittel bei einer Temperatur von 70-90°C und einer Verweilzeit von mindestens 2 Minuten entfernt. Anschließend wird die Temperatur auf 100-120°C erhöht und für bis zu 2 Minuten konstant gehalten.

Zusätzlich zu den klassischen Vernetzungsarten von Siliconhaftklebemassen mittels Peroxiden oder Übergangsmetallkatalyse können diese Klebmassen auch durch aktinische Strahlung, im speziellen Elektronenstrahlen, vernetzt werden. Dabei wird bei der Beschichtung aus Lösung zunächst das Lösungsmittel bei einer Temperatur von 70-90°C und einer Verweilzeit von mindestens 2 Minuten entfernt. Anschließend wird mit einer Elektronenstrahl-Dosis von mindestens 10 kGy vernetzt. Diese Art der Vernetzung ist besonders vorteilhaft, da sich so die Kohäsion nahezu stufenlos einstellen lässt, ohne dass die Eigenschaften Tack und Adhäsion negativ beeinflusst werden (vgl. auch DE 10 2007 053 432.0).

Weitere Einzelheiten, Ziele, Merkmale und Vorteile der vorliegenden Erfindung werden nachfolgend anhand bevorzugter Ausführungsbeispiele näher erläutert. In der Zeichnung zeigt
- Fig. 1: ein einseitiges Haftklebeband,
- Fig. 2: ein beidseitiges Haftklebeband,
- Fig. 3: ein trägerfreies Haftklebeband (Transferklebeband),
- Fig. 4: die Verklebung einer Rückseitenverstärkungsplatte eines Touch Panels,
- Fig. 5: die Verklebung verschiedener Schichten eines Touch Panels.

### Produktaufbau

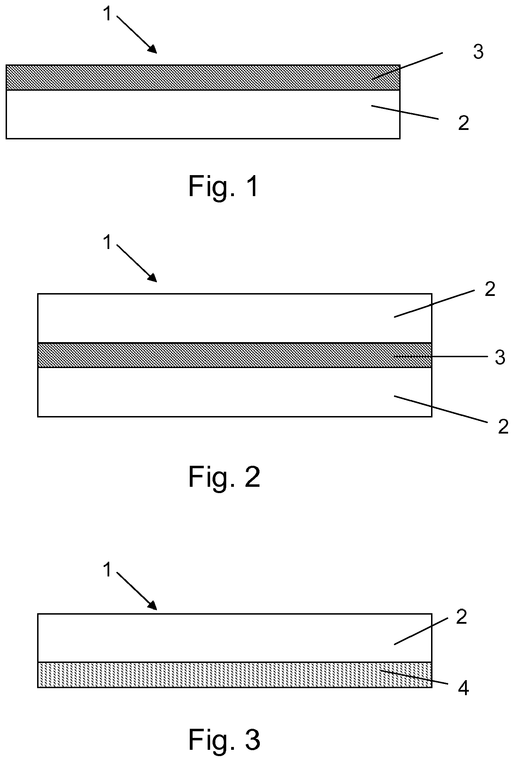

Fig. 1 zeigt ein einseitig klebendes Haftklebeband 1 zur Verwendung bei der Verklebung von optischen Bauteilen, insbesondere von optischen Folien. Das Haftklebeband 1 weist eine Klebeschicht 2 auf, die durch Beschichtung einer der zuvor beschriebenen Haftklebemasse auf einen Träger 3 hergestellt wurde. Der Haftklebemassenauftrag beträgt bevorzugt zwischen 5 und 250 g/m². Die Haftklebemasse weist insbesondere im sichtbaren Bereich des Lichtes einen Transmissionsgrad von mindestens 86 % auf, wodurch sie für die optische Anwendung besonders geeignet ist.

Für die Anwendung bei der Verklebung von optischen Bauteilen kommt auch als Träger 2 ein transparenter Träger 2 zum Einsatz. Der Träger 2 ist also ebenfalls im Bereich des sichtbaren Lichtes transparent, weist bevorzugt also einen Transmissionsgrad von ebenfalls mindestens 86 % auf.

Zusätzlich (nicht gezeigt) kann noch eine Trennfolie vorgesehen sein, die die Klebeschicht 2 vor der Verwendung des Haftklebebandes 1 abdeckt und schützt. Die Trennfolie wird dann vor der Verwendung von der Klebeschicht 2 entfernt.

Die transparente Haftklebemasse kann bevorzugt mit einer Trennfolie geschützt werden. Des Weiteren ist es möglich, dass die Trägerfolie mit einer oder mehreren Beschichtungen versehen ist. Der Haftklebemassenauftrag beträgt bevorzugt zwischen 5 und 250 g/m².

Der in Fig. 2 dargestellte Produktaufbau zeigt ein Haftklebeband 1 mit einem transparenten Träger 3, der beidseitig mit einer Haftklebemasse beschichtet ist und somit zwei Klebeschichten 2 aufweist. Der Haftklebemassenauftrag je Seite beträgt wiederum bevorzugt zwischen 5 und 250 g/m².

Auch bei dieser Ausgestaltung wird bevorzugt zumindest eine Klebeschicht 2 mit einer Trennfolie abgedeckt. Bei einem aufgerollten Klebeband kann diese eine Trennfolie ggf. auch die zweite Klebeschicht 2 abdecken. Es können aber auch mehrere Trennfolien vorgesehen sein.

Des Weiteren ist es möglich, dass die Trägerfolie mit einer oder mehreren Beschichtungen versehen ist. Weiterhin kann auch nur eine Seite des Haftklebebandes mit der erfinderischen Haftklebemasse ausgestattet sein und auf der anderen Seite eine andere transparente Haftklebemasse eingesetzt werden.

Der in Fig. 3 dargestellte Produktaufbau zeigt ein Haftklebeband 1 in Form eines Transferklebebandes, d.h. ein trägerfreies Haftklebeband 1. Hierzu wird die Haftklebemasse einseitig auf eine Trennfolie 4 beschichtet und bildet so eine Haftklebeschicht 2 aus. Der Haftklebemassenauftrag beträgt hier üblicherweise zwischen 5 und 250 g/m², bevorzugt ist ein Masseauftrag von 25 bis 175 g/m². Ggf. wird diese Haftklebeschicht 2 noch auf ihrer zweiten Seite mit einer weiteren Trennfolie abgedeckt. Zur Verwendung des Haftklebebandes werden dann die Trennfolien entfernt.

Als Alternative zu Trennfolien können beispielsweise auch Trennpapiere oder dgl. eingesetzt werden. In diesem Fall sollte die Oberflächenrauhigkeit des Trennpapiers aber reduziert sein, um eine möglichst glatte Haftklebemassenseite zu realisieren.

### Trägerfolien

Als Trägerfolien können eine Vielzahl von hochtransparenten Polymerfolien eingesetzt werden. Insbesondere spezielle hochtransparente PET Folien können eingesetzt werden. So eignen sich z.B. Folien der Firma Mitsubishi mit dem Handelsnamen Hostaphan™ oder der Firma Toray mit dem Handelsnamen Lumirror™. Der Haze-Wert, ein Maß für die Eintrübung einer Substanz, sollte in einer bevorzugten Auslegung einen Wert von kleiner 5 % nach ASTM D 1003 aufweisen. Ein hoher Haze-Wert bedeutet eine geringe Sichtbarkeit durch die entsprechende Substanz hindurch. Die Lichttransmission liegt bevorzugt bei 550 nm bei größer 86 %, besonders bevorzugt bei größer 88 %. Eine weitere sehr bevorzugte Spezies der Polyester stellen die Polybutylenterephthalat Folien dar.

Neben Polyesterfolien lassen sich auch hochtransparente PVC-Folien einsetzen. Diese Folien können Weichmacher enthalten, um die Flexibilität zu erhöhen. Weiterhin können PC, PMMA und PS Folien eingesetzt werden. Neben reinem Polystyrol lassen sich zur Verringerung der Kristallisationsneigung neben Styrol auch andere Comonomere, wie z.B. Butadien, einsetzen.

Weiterhin können Polyethersulfon- und Polysulfon-Filme als Trägermaterialien eingesetzt werden. Diese sind z.B. von der Firma BASF unter dem Tradenamen Ultrason™ E und Ultrason™ S zu beziehen. Ferner können auch besonders bevorzugt hochtransparente TPU-Folien eingesetzt werden. Diese sind z.B. kommerziell erhältlich von der Firma Elastogran GmbH. Es können auch hochtransparente Polyamid- und Copolyamid-Folien verwendet werden sowie Folien auf Basis von Polyvinylalkohol und Polyvinylbutyral.

Neben einschichtigen Folien können auch mehrschichtige Folien verwendet werden, die z.B. coextrudiert hergestellt werden. Hierfür können die zuvor genannten Polymermaterialien miteinander kombiniert werden.

Ferner können die Folien behandelt sein. So können z.B. Bedampfungen vorgenommen sein, beispielsweise mit Zinkoxid, oder es können Lacke oder Haftvermittler aufgetragen sein. Eine weitere mögliche Additivierung stellen UV-Schutzmittel dar, die als Additive in der Folie vorliegen können oder als Schutzschicht aufgebracht sein können.

Die Foliendicke beträgt in einer bevorzugten Auslegung zwischen 4 µm und 150 µm, besonders bevorzugt zwischen 12 µm und 100 µm.

Die Trägerfolie kann beispielsweise auch eine optische Beschichtung aufweisen. Als optische Beschichtung eignen sich insbesondere Beschichtungen, die die Reflektion verringern. Dies wird beispielsweise durch eine Absenkung der Brechungsindexdifferenz für den Übergang Luft / optische Beschichtung erreicht.

### Trennfolie

Zum Schutz der offenen (Haft-)Klebemasse wird diese bevorzugt mit einer oder mehreren Trennfolien abgedeckt. Neben den Trennfolien können - auch wenn nicht sehr bevorzugt - Trennpapiere eingesetzt werden, wie z.B. Glassine-, HDPE- oder LDPE-Trennpapiere, die in einer Auslegung eine Siliconisierung als Trennlage aufweisen.

Bevorzugt wird jedoch eine Trennfolie eingesetzt. Die Trennfolie besitzt in einer sehr bevorzugten Auslegung eine Siliconisierung, insbesondere eine Fluoro-Siliconisierung, als Trennmittel. Des Weiteren sollte der Folientrennliner eine extrem glatte Oberfläche besitzen, so dass keine Strukturierung der Haftklebemasse durch den Trennliner vorgenommen wird. Dies wird bevorzugt erreicht, durch die Verwendung von antiblockmittelfreien PET-Folien in Kombination von Siliconsystemen, insbesondere Fluoro-Siliconsystemen, die aus Lösung beschichtet wurden. Neben Fluoro-Siliconsystem kommen bevorzugt auch Beschichtungen aus fluorierten Kohlenwasserstoffen auf Trennfolien in Betracht

### Beschichtung

Die (Haft-)Klebemassen können aus Lösung beschichtet werden. Für die Beschichtung aus Lösung wird die (Haft-)Klebemasse in gängigen Lösungsmitteln, wie z.B. Toluol, Benzin, Heptan etc. gelöst und dann über eine Beschichtungsdüse oder ein Rakel beschichtet. Besonders bevorzugt ist die Fertigung der (Haft-)Klebemassen aus der Lösung, um eine zu frühe Vernetzung zu verhindern. Es können aber auch alle anderen Beschichtungsverfahren eingesetzt werden, die lösungsmittelhaltige Beschichtungen zulassen.

### Verwendung

Die zuvor beschriebenen (Haft-)Klebemassen und (Haft)-Klebebänder eignen sich insbesondere zur Verwendung in optischen Anwendungen, wobei bevorzugt permanente Verklebungen mit Verweilzeiten von größer einem Monat vorgenommen werden.

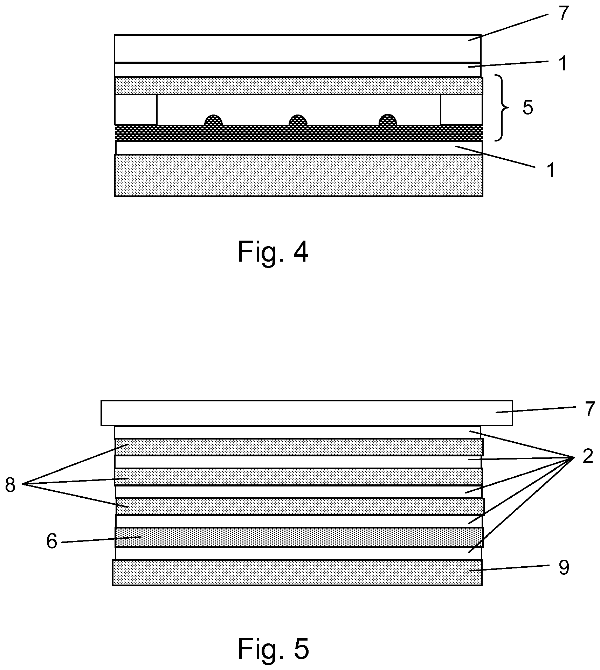

Das Einsatzgebiet umfasst die Verklebung von Touch Panels sowie die Herstellung von Touch Panels. In Fig. 4 sind typische Verklebungen in resistiven Touch Panels dargestellt. Hierfür werden bevorzugt Transfer-(Haft)-Klebebänder, also solche ohne Träger, eingesetzt. Topfilm oder Versteifungsplatte können aber auch in Form eines einseitigen (Haft)-Klebebandes mit dem entsprechenden Träger eingesetzt und verklebt werden.

Fig. 4 zeigt ein Touch Panel 5, das mittels eines ersten Haftklebebandes 1 auf einem Substrat 6, beispielsweise einer Plastikplatte oder einer Glasplatte verklebt ist. Auf das Touch Panel 5 ist dann mittels eines zweiten Haftklebebandes 1 ein Topfilm 7 aufgebracht, der üblicherweise eine Antikratzschicht aufweist.

In Fig. 5 sind typische Verklebungen für kapazitive Touch Panels dargestellt. Insbesondere für die Verklebung strukturierter ITO-Filme 8 werden Haftklebeschichten 2 mit Klebemassenaufträgen größer 50 g/m² eingesetzt, damit eine gute Benetzung der Strukturierung erreicht wird.

Die Siliconhaftklebemassen sind besonders für eine blasenfreie Laminierung auf strukturierten Flächen geeignet. Ein besonderer Vorteil liegt im Vergleich zu anderen Haftklebemassen in der deutlich geringeren Schichtdicke, die erforderlich ist, um eine blasenfreie Laminierung zu ermöglichen. So werden z.B. typischer Weise Acrylathaftklebemassen mit Schichtdicken von 175 µm bis 225 µm für diese Anwendung eingesetzt. Mit den erfinderischen Haftklebemassen lassen sich die gleichen Eigenschaften auch mit Schichtdicken von 50 bis 200 µm realisieren.

Andererseits eignen sich diese Siliconhaftklebemassen aber auch für besonders dicke Schichten, also insbesondere auch für Schichtdicken von bis 250 µm. Die Herstellung derartig dicker Schichten kann insbesondere in nur einem Beschichtungsschritt erfolgen, wohingegen für vergleichbare Schichtdicken mit Acrylatmassen regelmäßig mehrere Beschichtungsschritte erforderlich sind.

In Fig. 5 ist ferner die Verklebung eines Schutzfilmes oder eines Mobilfunktelefonfensters 7, eines Substrats 6 als Rückseitenverstärkungsplattes eines kapazitiven Touch Panels sowie eines Displays 9 mit der beschriebenen Haftklebemasse gezeigt. Dabei können sowohl die Haftklebemasse an sich als auch diese in Form eines Transferklebebandes, als einseitiges oder auch als doppelseitiges Haftklebeband mit Trägerfolie eingesetzt werden.

### Beispiele

### Prüfmethoden

### A. Klebkraft

Die Prüfung der Schälfestigkeit (Klebkraft) erfolgte gemäß PSTC-101. Das Klebeband wird auf eine Glasplatte aufgebracht. Ein 2 cm breiter Streifen des Klebebandes durch dreimaliges doppeltes Überrollen mittels einer 2 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen. Die Kraft wird in N/cm angegeben.

Im Fall einer Messung eines Transferklebebandes wird von diesem zuvor die Trennfolie entfernt. Diese Trennfolie wird anschließend durch eine 23 µm starke PET Folie ersetzt.

### B. Transmission

Die Bestimmung der Transmission bei 550 nm erfolgt nach ASTM D1003. Vermessen wurde der Verbund aus optisch transparenter Haftklebemasse und Glasplatte.

### C. Haze

Die Bestimmung des Haze erfolgt nach ASTM D1003.

### D. Lichtbeständigkeit

Der Verbund aus Haftklebemasse und Glasplatte wird in der Größe 4 x 20 cm² für 250 h mit Osram Ultra Vitalux 300 W Lampen in einem Abstand von 50 cm bestrahlt. Nach der Bestrahlung wird nach Prüfmethode C die Transmission bestimmt.

### E. Wechselklimatest

Die Haftklebemasse wird als einseitiges Haftklebeband (50 g/m² Masseauftrag, 50 µm PET Folie vom Typ Mitsubishi RNK 50) luftblasenfrei auf eine Glasplatte verklebt. Der Prüfstreifen besitzt die Dimension 2 cm Breite und 10 cm Länge. Es wird nach Prüfmethode A die Klebkraft auf Glas bestimmt.

Parallel wird ein derartiger Klebeverbund in einem Wechselklimaschrank platziert und für 1000 Zyklen gelagert. Ein Zyklus umfasst:
- die Lagerung bei -40°C für 30 Minuten
- Hochheizen innerhalb von 5 Minuten auf 85°C
- die Lagerung bei 85°C für 30 Minuten
- das Abkühlen auf -40°C innerhalb von 5 Minuten

Nach Klimawechseltest wird wiederum die Klebkraft nach Prüfmethode A bestimmt.

### F. Test zur elektrischen Leitfähigkeit

Die Haftklebemasse wird als einseitiges Haftklebeband auf einem ITO-Film (Elecrysta®) der Firma Nitto Denko verklebt. Der ITO-Film hat die Dimension 12 cm x 2 cm. Die Verklebungsfläche beträgt 10 cm x 2 cm, so dass an jedem Ende noch jeweils 1 cm für elektrische Messungen verbleiben. Anschließend wird der Verbund in einem Klimaschrank für 500 h bei 85°C und 20 % Luftfeuchtigkeit gelagert. Es wird dann der Oberflächenwiderstand nach DIN 53482 gemessen. Anschließend wird der prozentuale Abfall im Vergleich zu unbehandelter ITO-Folie bestimmt.

### G. Gelpermeationschromatographie (GPC)

Mittels GPC können die mittleren Molmassen (M_{W}) von Polymeren bestimmt werden. Für die M_{W} Bestimmung der MQ-Harze wurden folgende Einstellungen verwendet: Eluent Toluol; Messtemperatur 23°C; Vorsäule PSS-SDV, 5 µm, 10² Å (10 nm), ID 8,0 mm x 50 mm; Auftrennung: Säulen PSS-SDV, 5 µm, 10² Å (10 nm), sowie 10³ Å (100 nm), und 10⁶ Å (10⁵ nm), mit jeweils ID 8,0 mm x 300 mm; Probenkonzentration 3 g/l, Durchflussmenge 1,0 ml pro Minute; Polydimethylsiloxan-Standards).

### Beispiele

Die Beschichtungen erfolgten in den Beispielen auf einer üblichen Laborbeschichtungsanlage für kontinuierliche Beschichtungen. Die Beschichtung wurde in einem Reinraum ISO 5 nach Norm ISO 14644-1 vorgenommen. Die Bahnbreite betrug 50 cm. Die Beschichtungsspaltbreite war zwischen 0 und 1 cm variabel einstellbar. Die Länge des Wärmekanals betrug ca. 12 m. Die Temperatur im Wärmekanal war in vier Zonen einteilbar und jeweils zwischen Raumtemperatur und 180°C frei wählbar.

### Herstellung der Muster:

Die Beschichtung der Haftklebemassen erfolgte aus der Lösung auf Trennfolie. Der so erhaltene Klebefilm wurde nach dem Trocknen und Vernetzen mit einer weiteren Trennfolie kaschiert. Zur Messung der Klebkraft wurde eine Trennfolie gegen eine 23 µm dicke PET Folie ausgetauscht.

### Klebmassenherstellung

### a) Kondensationsvernetzende Klebmassen

Die kondensationsvernetzenden Siliconhaftklebmassen wurden mit Siedegrenzenbenzin (Sdp. = 60 - 90°C) auf einen Feststoffgehalt von 45% verdünnt, mit MQ-Harz und Benzoylperoxid (BPO) abgemischt und 30 Minuten gerührt. Bei der anschließenden Beschichtung wurden Massenaufträge (nach der Trocknung) von 50, 100 und 150 g/m² gewählt (entspricht Schichtdicken von ungefähr 50, 100 und 150 µm).

| Beispiel | Siliconhaftklebmasse | MQ-Harz | MQ-Harzzugabe in % | BPO Konzentration in % | Masseauftrag in g/m² | Klebkraft (Test A) in N/cm |
|---|---|---|---|---|---|---|
| 1 | DC Q2-7735 | - | - | 1,0 | 50 | 4,7 |
| 2 | DC Q2-7735 | - | - | 1,0 | 100 | 5,8 |
| 3 | DC Q2-7735 | - | - | 1,0 | 150 | 6,4 |
| 4 | DC Q2-7735 | DC 2-7066 | 5 | 1,0 | 50 | 5,2 |
| 5 | DC Q2-7735 | DC 2-7066 | 5 | 1,0 | 100 | 6,2 |
| 6 | DC Q2-7735 | DC 2-7066 | 5 | 1,0 | 150 | 6,9 |
| 7 | PSA 45559 SVP | - | - | 1,0 | 50 | 3,8 |
| 8 | PSA 45559 SVP | - | - | 1,0 | 100 | 4,8 |
| 9 | PSA 45559 SVP | - | - | 1,0 | 150 | 5,3 |
| 10 | PSA 45559 SVP | MQ 803 | 5 | 1,0 | 50 | 4,3 |
| 11 | PSA 45559 SVP | MQ 803 | 5 | 1,0 | 100 | 5,3 |
| 12 | PSA 45559 SVP | MQ 803 | 5 | 1,0 | 150 | 5,9 |

### b) Additionsvernetzende Klebmassen

Die additionsvernetzenden Siliconhaftklebmassen wurden mit Siedegrenzenbenzin (Sdp. = 60 - 90°C) auf einen Feststoffgehalt von 45% verdünnt, mit MQ-Harz und dem Platinkatalysator Syl-Off 4000 von Dow Corning abgemischt und 30 Minuten gerührt. Bei der anschließenden Beschichtung wurden Massenaufträge (nach der Trocknung) von 50, 100 und 150 g/m² gewählt (entspricht Schichtdicken von ungefähr 50, 100 und 150 µm).

| Beispiel | Siliconhaftklebmasse | MQ-Harz | MQ-Harzzugabe in % | Syl-Off 4000 Konzentration in % | Masseauftrag in g/m² | Klebkraft (Test A) in N/cm |
|---|---|---|---|---|---|---|
| 13 | DC 7657 | - | - | 1,0 | 50 | 3,8 |
| 14 | DC 7657 | - | - | 1,0 | 100 | 4,6 |
| 15 | DC 7657 | - | - | 1,0 | 150 | 5,0 |
| 16 | DC 7657 | DC 2-7066 | 3 | 1,0 | 50 | 4,2 |
| 17 | DC 7657 | DC 2-7066 | 3 | 1,0 | 100 | 5,1 |
| 18 | DC 7657 | DC 2-7066 | 3 | 1,0 | 150 | 5,5 |
| 19 | KR 3701 | - | - | 1,0 | 50 | 4,5 |
| 20 | KR 3701 | - | - | 1,0 | 100 | 5,2 |
| 21 | KR 3701 | - | - | 1,0 | 150 | 5,5 |
| 22 | KR 3701 | SR 545 | 5 | 1,0 | 50 | 4,9 |
| 23 | KR 3701 | SR 545 | 5 | 1,0 | 100 | 5,6 |
| 24 | KR 3701 | SR 545 | 5 | 1,0 | 150 | 5,9 |

### c) ESH vernetzte Klebmassen

Sowohl additions- als auch kondensationsvernetzende Siliconhaftklebmassen wurden mit Siedegrenzenbenzin (Sdp. = 60 - 90°C) auf einen Feststoffgehalt von 45% verdünnt, mit MQ-Harz abgemischt und 30 Minuten gerührt. Bei der anschließenden Beschichtung wurden Massenaufträge (nach der Trocknung) von 50, 100 und 150 g/m² gewählt (entspricht Schichtdicken von ungefähr 50, 100 und 150 µm).

| Beispiel | Siliconhaftklebmasse | MQ-Harz | MQ-Harzzugabe in % | ESH Dosis in kGy (Beschleunigungsspannung = 100 V) | Masseauftrag in g/m² | Klebkraft (Test A) in N/cm |
|---|---|---|---|---|---|---|
| 25 | DC Q2-7735 | - | - | 20 | 50 | 4,9 |
| 26 | DC Q2-7735 | - | - | 20 | 100 | 5,5 |
| 27 | DC Q2-7735 | - | - | 20 | 150 | 6,0 |
| 28 | DC Q2-7735 | DC 2-7066 | 5 | 20 | 50 | 5,3 |
| 29 | DC Q2-7735 | DC 2-7066 | 5 | 20 | 100 | 5,9 |
| 30 | DC Q2-7735 | DC 2-7066 | 5 | 20 | 150 | 6,3 |
| 31 | DC 7657 | - | - | 20 | 50 | 4,3 |
| 32 | DC 7657 | - | - | 20 | 100 | 4,9 |
| 33 | DC 7657 | - | - | 20 | 150 | 5,4 |
| 34 | DC 7657 | DC 2-7066 | 3 | 20 | 50 | 4,6 |
| 35 | DC 7657 | DC 2-7066 | 3 | 20 | 100 | 5,4 |
| 36 | DC 7657 | DC 2-7066 | 3 | 20 | 150 | 5,9 |

### Herstellung eines Referenzbeispiel 1:

Für die Polymerisation wurden von Stabilisatoren gereinigte Monomere eingesetzt. Ein für radikalische Polymerisationen konventioneller 2 L-Glasreaktor wurde mit 32 g Acrylsäure, 168 g n-Butylacrylat, 200 g 2-Ethylhexylacrylat, und 300 g Aceton/Isopropanol (Verhältnis 97:3) befüllt. Nach 45 Minuten Durchleiten mit Stickstoffgas unter Rühren wurde der Reaktor auf 58°C hochgeheizt und 0,2 g Vazo67® (Fa. DuPont, 2,2'-Azodi(2-methylbutyronitril)) hinzugegeben. Anschließend wurde das äußere Heizbad auf 75°C erwärmt und die Reaktion konstant bei dieser Außentemperatur durchgeführt. Nach 1 h Reaktionszeit wurde wiederum 0,2 g Vazo 67® (Fa. DuPont, 2,2'-Azodi(2-methylbutyronitril)) hinzugegeben. Nach 3 und 6 h wurde mit jeweils 150 g Aceton/Isopropanol Gemisch verdünnt. Zur Reduktion der Restinitiatoren wurden nach 8 und nach 10 h jeweils 0,1 g Perkadox 16® (Fa. Akzo Nobel, Di(4-tert-butylcyclohexyl) peroxydicarbonat) hinzugegeben. Die Reaktion wurde nach 22 h Reaktionszeit abgebrochen und auf Raumtemperatur abgekühlt. Anschließend wurde auf einen Feststoffgehalt von 30 % mit Isopropanol verdünnt und unter starkem Rühren 0,3 Gew.-% Aluminiumacetylacetonat hinzugegeben. Die Lösung wurde dann analog zu den erfinderischen Beispielen 1 - 3 auf einer Trennfolie ausgestrichen und 10 Minuten bei 120°C getrocknet. Der Masseauftrag betrug 50 g/m². Die Klebkraft nach Testmethode A betrug 6,4 N/cm.

### Ergebnisse

Die Prüfmusterherstellung zeigte, dass die erfinderischen Beispiele 1 - 36 alle hohe Klebkräfte aufweisen. Die Klebkräfte sind abhängig vom Masseauftrag. Das Referenzmuster1 auf Polyacrylathaftklebemassenbasis zeigt ähnliche Klebkräfte nach Testmethode A. Die erfinderischen Beispiele 1 - 36 belegen, dass alle Beispiele zur permanenten Verklebungen und nicht für temporäre Verklebungen geeignet sind.

Für die Eignung im optischen Bereich wurden ferner optische Messungen durchgeführt. Die Lichtdurchlässigkeit wird in Form der Transmission nach Testmethode B bestimmt. Die Eintrübung der Haftklebemassen wird durch Testmethode C bestimmt und durch den Haze-Wert beschrieben. Die Ergebnisse sind in folgender Tabelle 1 zusammengefasst.

| Tabelle 1 | | |
|---|---|---|
| Beispiel | Transmission (Test B) in % | Haze (Test C) in % |
| 1 | 92 | 0,3 |
| 2 | 92 | 0,4 |
| 3 | 92 | 0,6 |
| 4 | 92 | 0,3 |
| 5 | 92 | 0,5 |
| 6 | 92 | 0,7 |
| 7 | 92 | 0,3 |
| 8 | 92 | 0,4 |
| 9 | 92 | 0,6 |
| 10 | 92 | 0,3 |
| 11 | 92 | 0,5 |
| 12 | 92 | 0,6 |
| 13 | 92 | 0,3 |
| 14 | 92 | 0,5 |
| 15 | 92 | 0,6 |
| 16 | 92 | 0,4 |
| 17 | 92 | 0,6 |
| 18 | 92 | 0,7 |
| 19 | 92 | 0,3 |
| 20 | 92 | 0,4 |
| 21 | 92 | 0,6 |
| 22 | 92 | 0,4 |
| 23 | 92 | 0,6 |
| 24 | 92 | 0,7 |
| 25 | 92 | 0,4 |
| 26 | 92 | 0,6 |
| 27 | 92 | 0,7 |
| 28 | 92 | 0,4 |
| 29 | 92 | 0,5 |
| 30 | 92 | 0,8 |
| 31 | 92 | 0,4 |
| 32 | 92 | 0,6 |
| 33 | 92 | 0,7 |
| 34 | 92 | 0,4 |
| 35 | 92 | 0,5 |
| 36 | 92 | 0,7 |
| Referenz1 | 93 | 0,4 |

Aus den Prüfungen geht hervor, dass alle erfinderischen Beispiele hohe Transmissionswerte von 92 % aufweisen, wobei diese durch die Lichtreflektion gemindert sind. Bei Glas/Glas Verklebungen können abzüglich der Reflektionsverluste Transmissionswerte größer 99 % gemessen werden. Das Referenzbeispiel auf Polyacrylatbasis zeigt ähnliche Transmissionswerte. Die erfinderischen Siliconhaftklebemassen sind somit für hohe optische Transmissionen geeignet. Die Haze-Messungen nach Testmethode C bestätigen dies. Die gemessenen Haze-Werte liegen für alle erfinderischen Siliconhaftklebemassen unterhalb 1 % und erfüllen damit höchste Anforderungen.

Im Folgenden wurden weiterhin verschiedene Alterungsuntersuchungen durchgeführt. Als erstes wurde ein Lichtbeständigkeitstest nach Testmethode D durchgeführt. Hier wird überprüft, ob durch lange Sonnenlichtbestrahlung eine Verfärbung oder Vergilbung eintritt. Dies ist besonders wichtig für optische Anwendungen, die einer Dauerbestrahlung, wie z.B. durch ein Display, ausgesetzt sind oder im Außenbereich eingesetzt werden. Die Ergebnisse sind in Tabelle 2 zusammengefasst.

| Tabelle 2 | |
|---|---|
| Beispiel | Lichtbeständigkeit (Test D) Transmission in % |
| 1 | 92 |
| 2 | 92 |
| 3 | 92 |
| 4 | 92 |
| 5 | 92 |
| 6 | 92 |
| 7 | 92 |
| 8 | 92 |
| 9 | 92 |
| 10 | 92 |
| 11 | 92 |
| 12 | 92 |
| 13 | 92 |
| 14 | 92 |
| 15 | 92 |
| 16 | 92 |
| 17 | 92 |
| 18 | 92 |
| 19 | 92 |
| 20 | 92 |
| 21 | 92 |
| 22 | 92 |
| 23 | 92 |
| 24 | 92 |
| 25 | 92 |
| 26 | 92 |
| 27 | 92 |
| 28 | 92 |
| 29 | 92 |
| 30 | 92 |
| 31 | 92 |
| 32 | 92 |
| 33 | 92 |
| 34 | 92 |
| 35 | 92 |
| 36 | 92 |
| Referenz1 | 91 |

Tabelle 2 kann entnommen werden, dass alle Beispiele und Referenzbeispiel 1 eine stabile Transmission aufweisen und keinen oder im Fall des Referenzbeispiels 1 einen nur sehr geringen Abfall in der Transmission zeigen.

Ein weiterer Alterungstest umfasst eine Wechselklimaprüfung. Hier wird die Situation simuliert, dass die Klebemasse einem sehr unterschiedlichen Klima ausgesetzt wird, was wiederum der Fall sein kann für Endanwendungen im Mobiletelefonbereich. Der Wechselklimatest wurde nach Testmethode E durchgeführt. Die Ergebnisse sind in Tabelle 3 dargestellt.

| Tabelle 3 | | |
|---|---|---|
| Beispiel | Klebkraft (Test A) in N/cm | Klebkraft nach Wechselklimatest (Test E) in N/cm |
| 1 | 4,7 | 4,9 |
| 2 | 5,8 | 6,2 |
| 3 | 6,4 | 6,8 |
| 4 | 5,2 | 5,5 |
| 5 | 6,2 | 6,7 |
| 6 | 6,9 | 7,0 |
| 7 | 3,8 | 4,1 |
| 8 | 4,8 | 5,0 |
| 9 | 5,3 | 5,6 |
| 10 | 4,3 | 4,5 |
| 11 | 5,3 | 5,6 |
| 12 | 5,9 | 6,4 |
| 13 | 3,8 | 3,9 |
| 14 | 4,6 | 4,7 |
| 15 | 5,0 | 5,3 |
| 16 | 4,2 | 4,4 |
| 17 | 5,1 | 5,4 |
| 18 | 5,5 | 5,8 |
| 19 | 4,5 | 4,9 |
| 20 | 5,2 | 5.7 |
| 21 | 5,5 | 5,9 |
| 22 | 4,9 | 5,2 |
| 23 | 5,6 | 5,8 |
| 24 | 5,9 | 6,3 |
| 25 | 4,9 | 5,3 |
| 26 | 5,5 | 5,7 |
| 27 | 6,0 | 6,2 |
| 28 | 5,3 | 5,5 |
| 29 | 5,9 | 6,3 |
| 30 | 6,3 | 6,5 |
| 31 | 4,3 | 4,6 |
| 32 | 4,9 | 5,1 |
| 33 | 5,4 | 5,7 |
| 34 | 4,6 | 4,7 |
| 35 | 5,4 | 5,6 |
| 36 | 5,9 | 6,2 |
| Referenz1 | 6,4 | 6,9 |

Die Messungen aus Tabelle 3 zeigen ein sehr stabiles Verklebungsniveau für alle erfinderischen Beispiele. Als einzige Auffälligkeit wurde beim Referenzbeispiel 1 eine Blasenbildung festgestellt, verursacht vermutlich durch Ausgasungen aus der PET-Folie. Die erfinderischen Beispiele zeigten ein solches Problem dagegen nicht. Auch traten in keinem der Beispiele Abhebungen oder Ähnliches auf. Dies ist ein weiteres Indiz für eine ausreichend hohe Verklebungsfestigkeit.

Als letzte Messung wurde noch einmal mit allen Beispielen und Referenzbeispielen eine Verklebung auf einem ITO-Film vorgenommen. ITO-Filme werden sehr häufig zur Herstellung von Touch Panels eingesetzt. Ziel ist hier, dass auch nach der Verklebung mit einer Haftklebemasse die elektrische Leitfähigkeit der ITO-Schicht nicht negativ beeinflusst wird. Mit der Testmethode F wird die Verklebung über einen längeren Zeitraum gemessen. Hiermit wird simuliert, ob Alterungseffekte auftreten, die die elektrische Leitfähigkeit über die Zeit negativ beeinflussen. Der Verlust in Prozent wird durch den Vergleich der Frischmessung mit dem gelagerten Verbund bestimmt. Für Touch Panel Anwendungen sind Verluste von kleiner 5 % erforderlich, um eine gute Eignung zu besitzen.

Die Ergebnisse zu diesen Untersuchungen sind in Tabelle 4 zusammengefasst.

| Tabelle 4 | |
|---|---|
| Beispiel | Test zur elektrischen Leitfähigkeit (Test F) Verlust in % |
| 1 | < 1 |
| 2 | < 1 |
| 3 | < 1 |
| 4 | < 1 |
| 5 | < 1 |
| 6 | < 1 |
| 7 | < 1 |
| 8 | < 1 |
| 9 | < 1 |
| 10 | < 1 |
| 11 | < 1 |
| 12 | < 1 |
| 13 | < 1 |
| 14 | < 1 |
| 15 | < 1 |
| 16 | < 1 |
| 17 | < 1 |
| 18 | < 1 |
| 19 | < 1 |
| 20 | < 1 |
| 21 | < 1 |
| 22 | < 1 |
| 23 | < 1 |
| 24 | < 1 |
| 25 | < 1 |
| 26 | < 1 |
| 27 | < 1 |
| 28 | < 1 |
| 29 | < 1 |
| 30 | < 1 |
| 31 | < 1 |
| 32 | < 1 |
| 33 | < 1 |
| 34 | < 1 |
| 35 | < 1 |
| 36 | < 1 |
| Referenz1 | 15 |

Die Messergebnisse verdeutlichen, dass das Vergleichsbeispiel Referenz 1 einen deutlichen Abfall der elektrischen Leitfähigkeit verursacht. Referenzbeispiel 1 basiert auf einem Polyacrylat und enthält Acrylsäuregruppen. Dagegen zeigen die erfinderischen Beispiele 1 bis 36 so gut wie keinen Verlust der elektrischen Leitfähigkeit von ITO. Somit sind die Beispiele 1 - 36 hervorragend zur Verklebung von ITO-Filmen geeignet und weisen signifikante Vorteile gegenüber handelsüblichen Acrylathaftklebemassen auf, die ebenfalls im optischen Bereich zur ITO-Verklebung eingesetzt werden.

Zusammenfassend belegen die Messergebnisse, dass die erfinderischen Haftklebemassen sowie deren erfinderische Verwendung sehr gut für die Verklebung von Touch Panels oder die Verklebung von ITO-Folien für kapazitive Touch Panels geeignet sind. Die Haftklebemassen weisen signifikante Vorteile gegenüber bestehenden Haftklebemassen auf z.B. Polyacrylatbasis auf.

## Patentansprüche

1. Verwendung einer Klebemasse, insbesondere einer Haftklebemasse, basierend auf Polysiloxan zur Verklebung und Herstellung von Touch Panels,
wobei die Klebemasse eine Transmission nach ASTM D 1003 größer 86 % und einen Haze nach ASTM D 1003 kleiner 5 % aufweist.

2. Verwendung nach Anspruch 1, **dadurch gekennzeichnet,**
**dass** die Klebemasse auf kondensationsvernetzendem Silicon mit folgenden Komponenten basiert:
a) einem hydroxy-funktionalisierten Organopolysiloxan, das mindestens eine Diorganosiloxaneinheit aufweist,
b) einem Organopolysiloxanharz mit der Formel: (R¹₃SiO_{1/2})ₓ(SiO_{4/2})₁,
wobei R¹ eine substituierte oder unsubstituierte monovalente Kohlenwasserstoffgruppe, ein Wasserstoffatom oder eine Hydroxygruppe und x eine Zahl zwischen 0,5 und 1,2 ist,
c) optional einem Stabilisator
d) optional einem Initiator.

3. Verwendung nach Anspruch 2, **dadurch gekennzeichnet,**
**dass** die Klebemasse mit einem Peroxo-Initiatoren, insbesondere mit Benzoylperoxid, compoundiert ist,
vorzugsweise, dass der Peroxo-Initiator in einer Menge von 0,2 bis 5 Gew.-% bezogen auf den Festanteil der Klebemasse eingesetzt ist.

4. Verwendung nach Anspruch 1, **dadurch gekennzeichnet,**
**dass** die Klebemasse auf additionsvernetzendem Silicon mit folgenden Komponenten basiert:
a) einem Organopolysiloxan, das mindestens eine Diorganosiloxaneinheit und mindestens zwei Silizium-gebundene Alkenylgruppen in jedem Molekül aufweist,
b) einem Organopolysiloxanharz mit der Formel: (R¹₃SiO_{1/2})ₓ(SiO_{4/2})₁,
wobei R¹ eine substituierte oder unsubstituierte monovalente Kohlenwasserstoffgruppe, ein Wasserstoffatom oder eine Hydroxygruppe und x eine Zahl zwischen 0,5 und 1,2 ist,
c) einem Organopolysiloxan, das im Mittel wenigstens zwei Silizium-gebundene Wasserstoffatome in jedem Molekül trägt,
wobei dieses Organopoylsiloxan frei von olefinischen Doppelbindungen ist und wobei die Menge dieses Organopolysiloxan so gewählt ist, dass 0,01 bis 10 Mol Silizium-gebundene Wasserstoffatome pro Mol der gesamten Alkenylgruppen der Komponenten a), b) und sofern enthalten e) vorhanden sind,
d) einem metallorganischen Katalysator der 10. Gruppe des Periodensystems der Elemente,
e) optional einem Inhibitor.

5. Verwendung nach einem der Ansprüche 1 bis 3, **dadurch gekennzeichnet,**
**dass** die Klebemasse mit aktinischer Strahlung, vernetzt wird, vorzugsweise mit Elektronenstrahlen in einer Dosis von mindestens 10 kGy.

6. Verwendung nach einem der Ansprüche 2 bis 5, **dadurch gekennzeichnet,**
**dass** das Verhältnis der (R¹₃SiO_{1/2})ₓ-Einheiten ("M-Einheiten") zu den (SiO_{4/2})₁-Einheiten ("Q-Einheiten") im Bereich von 0,5 bis 1,2 liegt.

7. Verwendung nach einem der Ansprüche 2 bis 6, **dadurch gekennzeichnet,**
**dass** das gewichtsmittlere Molekulargewicht MW der Organopolysiloxanharz (MQ-Harze) im Bereich von 500 g/mol bis 100.000 g/mol liegt, vorzugsweise im Bereich von 1.000 g/mol bis 25.000 g/mol.

8. Verwendung nach einem der Ansprüche 2 bis 7, **dadurch gekennzeichnet,**
**dass** das Anteilsverhältnis des Organopolysiloxans zum Organopolysiloxanharz bezogen auf Gewichtsprozent im Bereich von 20:80 bis 80:20, vorzugsweise im Bereich von 30:70 bis 60:40, liegt.

9. Verwendung nach einem der vorhergehenden Ansprüche, **dadurch gekennzeichnet,**
**dass** das Touch Panel elektrisch leitfähig ist und/oder eine mikrostrukturierte Oberfläche aufweist.

10. Verwendung nach einem der vorhergehenden Ansprüche, **dadurch gekennzeichnet,**
**dass** die Klebemasse in Form eines Klebebandes bereitgestellt ist

11. Verwendung nach Anspruch 10, **dadurch gekennzeichnet,**
**dass** das Klebeband mindestens eine Klebeschicht aufweist, vorzugsweise, dass die Klebeschicht eine Schichtdicke im Bereich von 25 bis 150 µm, bevorzugt im Bereich von 50 bis 100 µm aufweist oder dass die Klebeschicht eine Schichtdicke im Bereich von 100 bis 250 µm, bevorzugt im Bereich von 150 bis 200 µm aufweist.

12. Verwendung nach Anspruch 11, **dadurch gekennzeichnet,**
**dass** die Klebeschicht in nur einem Beschichtungsschritt hergestellt ist.

## Claims

1. Use of an adhesive, more particularly a pressure-sensitive adhesive, based on polysiloxane for the adhesive bonding and manufacture of touch panels, the adhesive having an ASTM D 1003 transmittance of more than 86% and an ASTM D 1003 haze of less than 5%.

2. Use according to Claim 1, **characterized in that** the adhesive is based on condensation-crosslinking silicone with the following components:
a) a hydroxy-functionalized organopolysiloxane which has at least one diorganosiloxane unit,
b) an organopolysiloxane resin with the following formula: (R¹₃SiO_{1/2})ₓ(SiO_{4/2})₁, where R¹ is a substituted or unsubstituted monovalent hydrocarbon group, a hydrogen atom or a hydroxyl group and x is a number between 0.5 and 1.2,
c) optionally a stabilizer,
d) optionally an initiator.

3. Use according to Claim 2, **characterized in that** the adhesive is compounded with a peroxo initiator, more particularly with benzoyl peroxide,
preferably **in that** the peroxo initiator is used in an amount of 0.2% to 5% by weight, based on the solids fraction of the adhesive.

4. Use according to Claim 1, **characterized in that** the adhesive is based on addition-crosslinking silicone with the following components:
a) an organopolysiloxane which has at least one diorganosiloxane unit and at least two silicon-bonded alkenyl groups in each molecule,
b) an organopolysiloxane resin with the following formula: (R¹₃SiO_{1/2})ₓ(SiO_{4/2})₁, where R¹ is a substituted or unsubstituted monovalent hydrocarbon group, a hydrogen atom or a hydroxyl group and x is a number between 0.5 and 1.2,
c) an organopolysiloxane which carries on average at least two silicon-bonded hydrogen atoms in each molecule,
this organopolysiloxane being free from olefinic double bonds, and the amount of this organopolysiloxane being selected such that there are 0.01 to 10 mol of silicon-bonded hydrogen atoms per mole of the total alkenyl groups of components a), b), and, where present, e),
d) an organometallic catalyst from group 10 of the Periodic Table of the Elements,
e) optionally an inhibitor.

5. Use according to any of Claims 1 to 3, **characterized in that** the adhesive is crosslinked with actinic radiation, preferably with electron beams in a dose of at least 10 kGy.

6. Use according to any of Claims 2 to 5, **characterized in that** the ratio of the (R¹₃SiO_{1/2})ₓ units ("M units") to the (SiO_{4/2})₁ units ("Q units") is in the range from 0.5 to 1.2.

7. Use according to any of Claims 2 to 6, **characterized in that** the weight-average molecular weight MW of the organopolysiloxane resins (MQ resins) is in the range from 500 g/mol to 100 000 g/mol, preferably in the range from 1000 g/mol to 25 000 g/mol.

8. Use according to any of Claims 2 to 7, **characterized in that** the proportional ratio of the organopolysiloxane to the organopolysiloxane resin, based on percent by weight, is in the range from 20:80 to 80:20, preferably in the range from 30:70 to 60:40.

9. Use according to any of the preceding claims, **characterized in that** the touch panel is electrically conductive and/or has a microstructured surface.

10. Use according to any of the preceding claims, **characterized in that** the adhesive is provided in the form of an adhesive tape.

11. Use according to Claim 10, **characterized in that** the adhesive tape has at least one adhesive layer, preferably **in that** the adhesive layer has a layer thickness in the range from 25 to 150 µm, preferably in the range from 50 to 100 µm, or **in that** the adhesive layer has a layer thickness in the range from 100 to 250 µm, preferably in the range from 150 to 200 µm.

12. Use according to Claim 11, **characterized in that** the adhesive layer is produced in only one coating step.

## Revendications

1. Utilisation d'une masse adhésive, en particulier d'une masse autoadhésive, à base d'un polysiloxane pour le collage et la fabrication d'écrans tactiles, la masse adhésive présentant une transmission selon la norme ASTM D 1003 supérieure à 86% et un voile selon la norme ASTM D 1003 inférieur à 5%.

2. Utilisation selon la revendication 1, **caractérisée en ce que** la masse adhésive est à base de silicone réticulant par condensation, présentant les composants suivants :
a) un organopolysiloxane à fonctionnalité hydroxy, qui présente au moins une unité diorganosiloxane,
b) une résine d'organopolysiloxane présentant la formule (R¹₃SiO_{1/2})ₓ(SiO_{4/2})₁, R¹ représentant un groupe hydrocarboné monovalent substitué ou non substitué, un atome d'hydrogène ou un groupe hydroxy et x valant un nombre entre 0,5 et 1,2,
c) éventuellement un stabilisant
d) éventuellement un initiateur.

3. Utilisation selon la revendication 2, **caractérisée en ce que** la masse adhésive est mélangée avec un initiateur de type peroxo, en particulier avec du peroxyde de benzoyle, de préférence **en ce que** l'initiateur peroxo est utilisé en une quantité de 0,2 à 5% en poids par rapport à la proportion des solides de la masse adhésive.

4. Utilisation selon la revendication 1, **caractérisée en ce que** la masse adhésive est à base de silicone réticulant par addition, présentant les composants suivants :
a) un organopolysiloxane, qui présente au moins une unité diorganosiloxane et au moins deux groupes alcényle liés par silicium dans chaque molécule,
b) une résine d'organopolysiloxane présentant la formule (R¹₃SiO_{1/2})ₓ(SiO_{4/2})₁, R¹ représentant un groupe hydrocarboné monovalent substitué ou non substitué, un atome d'hydrogène ou un groupe hydroxy et x valant un nombre entre 0,5 et 1,2,
c) un organopolysiloxane, qui porte en moyenne au moins deux atomes d'hydrogène liés par silicium dans chaque molécule, cet organopolysiloxane étant exempt de doubles liaisons oléfiniques et la quantité de cet organopolysiloxane étant choisie de manière telle que 0,01 à 10 moles d'atomes d'hydrogène liés par silicium sont présents par mole de la totalité de groupes alcényle des composants a), b) et, s'il est contenu, e),
d) un catalyseur organométallique du 10ème groupe du système périodique des éléments,
e) éventuellement un inhibiteur.

5. Utilisation selon l'une quelconque des revendications 1 à 3, **caractérisée en ce que** la masse adhésive est réticulée par un rayonnement actinique, de préférence par des rayons électroniques à une dose d'au moins 10 kGy.

6. Utilisation selon l'une quelconque des revendications 2 à 5, **caractérisée en ce que** le rapport des unités (R¹₃SiO_{1/2})ₓ ("unités M") aux unités (SiO_{4/2})₁ ("unités Q") se situe dans la plage de 0,5 à 1,2.

7. Utilisation selon l'une quelconque des revendications 2 à 6, **caractérisée en ce que** le poids moléculaire pondéral moyen MW de la résine d'organopolysiloxane (résine MQ) se situe dans la plage de 500 g/mole à 100.000 g/mole, de préférence dans la plage de 1000 g/mole à 25.000 g/mole.

8. Utilisation selon l'une quelconque des revendications 2 à 7, **caractérisée en ce que** le rapport des proportions en pourcentage pondéral de l'organopolysiloxane à la résine d'organopolysiloxane, se situe dans la plage de 20:80 à 80:20, de préférence dans la plage de 30:70 à 60:40.

9. Utilisation selon l'une quelconque des revendications précédentes, **caractérisée en ce que** l'écran tactile est électriquement conducteur et/ou présente une surface microstructurée.

10. Utilisation selon l'une quelconque des revendications précédentes, **caractérisée en ce que** la masse adhésive est mise à disposition sous forme d'une bande adhésive.

11. Utilisation selon la revendication 10, **caractérisée en ce que** la base adhésive présente au moins une couche adhésive, de préférence **en ce que** la couche adhésive présente une épaisseur de couche dans la plage de 25 à 150 µm, de préférence dans la plage de 50 à 100 µm ou **en ce que** la couche adhésive présente une épaisseur de couche dans la plage de 100 à 250 µm, de préférence dans la plage de 150 à 200 µm.

12. Utilisation selon la revendication 11, **caractérisée en ce que** la couche adhésive n'est préparée que par une seule étape de revêtement.
